# EUROPEAN PATENT APPLICATION

(11) **EP 1 211 872 A1**
(43) Date of publication of application: **05.06.2002**
(21) Application number: 01309883.5
(22) Date of filing: 23.11.2001
(51) Int. Cl.: H04M 1/05

(54) **An accessory for a communication terminal**

(30) Priority: 30.11.2000 GB 0029275
(71) Applicant: Nokia Corporation, 02150 Espoo (FI)
(72) Inventor: Lindholm, Christian, 00150 Helsinki (FI)
(74) Representative: Haws, Helen

(57) **Abstract**

An audio accessory includes a neck strap having an attachment device for attaching an audio source to the neck strap, whereby the audio source may be carried in said neck strap during normal use. At least one earplug is connected to the audio source through a set of wires to be connected to said audio source, and the neck strap has gripping means for attaching the earplug wires to said neck strap.

## Description

The invention relates an accessory for a communication terminal, e.g. hand-portable phone.

During the past years, cellular terminals have become more and more popular among users. These terminals have become smaller and smaller, and for instance the most popular phones will have a weight in the region of 100-150 grams. The use of headsets is in general used for allowing the user to keep his hands free during a telephone conversation. Traditionally these headsets are connected to the cellular terminals via a set of wires. However during the past there has been a focus on headsets being connected to a cellular terminal via a low power RF connection, e.g. Bluetooth™. However this requires an extra battery in the headset because the cellular terminal usually powers the headset unit.

According to a first aspect of the invention there is provided an audio accessory including a neck strap having an attachment device for attaching an audio source to the neck strap, whereby the audio source may be carried in said neck strap during normal use, at least one earplug to be connected to said audio source through a set of wires to be connected to said audio source, and gripping means for attaching said earplug wires to said neck strap. Hereby the headset remains connected to the phone. The user carries the phone in said neck strap and when he removes the earplug from his ear, the earplug is maintained in a position close to the neck of the user so the earplug is easy to find when an incoming call occurs.

According to the preferred embodiment of the invention the accessory includes catching means connected to said neck strap for catching a free end of the earplug wire carrying said at least one earplug when removed from the ear. The catching means includes preferably a permanent magnet mounted on said neck strap. Hereby the magnet will catch the earplug when the plug is removed from the ear.

Preferably the magnet is mounted at a distance from the gripping means corresponding to a free end of the earpiece wire from the gripping means. Hereby the free end will be kept almost in parallel to the corresponding part of the neck strap.

If the audio accessory includes two earplugs for providing a stereophonic audio signal, the neck strap comprises gripping means for each of the two earplug wires to said neck strap, and catching means connected to said neck strap for catching each free end of the earpiece wire carrying the respective earplugs.

For a better understanding of the present invention and to understand how the same may be brought into effect reference will now be made by way of example only to the accompanying drawings in which: -
Fig. 1 illustrates a preferred embodiment of an audio accessory for a communication terminal according to the invention.
Fig. 2 illustrates an alternative embodiment of an audio accessory for a communication terminal according to the invention.
Fig. 3 shows in perspective the gripping means shown in fig. 1 and 2
Fig. 4 shows in perspective the attachment device shown in fig. 1 and 2.

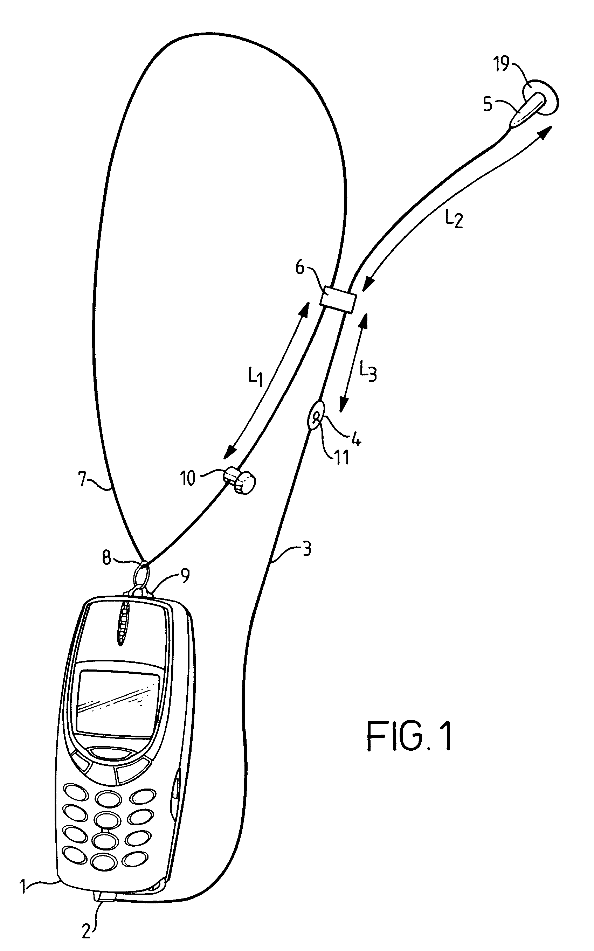

Fig. 1 shows a preferred embodiment of an audio accessory according to the invention. The audio accessory according to the invention will according to the preferred embodiment be explained with reference to a cellular phone 1 forming an audio source. A neck strap 7 is attached to the phone 1 by means of a releasable lock fitting 8 engaging in an eyelet 9 integrated in the housing of the phone 1. An attachment device 6 has a function to attach the neck strap 7 to a set of wires 3 connecting an earplug 5 to the phone 1 forming the audio source. The attachment device 6 may advantageously ensure that neither the neck strap 7 nor the set of wires 3 slides in the attachment device 6 in relation to each other.

When the cellular phone 1 is attached to the neck strap 7, the cellular phone 1 may be carried in said neck strap 7 around the neck of the user during normal use. An earplug 5 terminates the set of wires 3 and the set of wires 3 is in the opposite end connected to the cellular phone 1 via a male connector 2 plugged into a female connector being provided in the bottom of the cellular phone 1.

The set of wires 3 is provided with a microphone body 4 having an operation button 11. When an incoming call is detected and the phone alerts the user, the user may respond to the call by pressing the operation button 11. Furthermore the operation button 11 may in idle mode and the phone be used for initiating a voice control application in the phone.

On the neck strap 7 there is provided gripping means 10 for catching earplug 5 when removed from the ear. If the user has removed the earplug 5 from his ear and he still carries the phone 1 with the neck strap around his neck, user may respond an incoming call by pressing the operation button 11 and place the earplug 5 in the ear. The part of the earplug 5 to be inserted into the ear of the user is covered by foamed rubber cover 19. The user will by means of the invention always be able to respond to the call and place the earplug 5 in one movement. The invention offers the user a fast and efficient handling of a wired headset.

Above the audio source has been explained as a cellular phone 1, but the audio source may be constituted by any kind of communication terminal providing an audio signal, that may be played for the user via a headset. The audio source may also include music and broadcast sources, as CD player, FM radios, etc.

The phone 1 comprises a keypad, a display, and internal speaker, and microphone. According to the preferred embodiment the phone 1 is adapted for communication via a cellular network, such as the GSM 900/1800 MHz network. The two mating connector parts may be provided with an interface corresponding to the Nokia 3310 phone and the corresponding HDC-5 headset - both available on the market. The phone 1 and the audio accessory will normally have a total weight of 200 grams

The neck strap 7 is provided in a flexible and light material, e.g. as a soft nylon webbing, as a weaved string, or even as a metal ball chain. The set of wires 3 includes according to the preferred embodiment a two-wire lead supplying the audio signal from the phone 1 to the earplug 5, and furthermore a further two-wire lead carrying the microphone signal from the microphone body 4 to the phone 1 and dealing with the signaling provided by pressing the operation button 11.

The length L₂ of the set of wires 3 between the earplug 5 and the attachment device 6 is slightly greater than the length L₁ of the neck strap 7 between the attachment device 6 and the gripping means 10, so the gripping means 10 preferably including a permanent magnet may catch the earplug 5 including a metallic transducers. The metallic transducer and thereby the earplug will be attached by the magnet of the attachment device 10. Preferably the distance (L₂ plus L₃) between the center of the earplug 5 and the center of the microphone body 4 will be 12-16 cm, while the length L₂ will be 7-12 cm and the length L₁ will be 6-11 cm. L₃ will then be 4-7 cm.

According to a further embodiment of the invention the eyelet 9 may be provided in the bottom of the phone 1 close to the connector 2 whereby the overall length of the earplug set of wire 3 may be reduced.

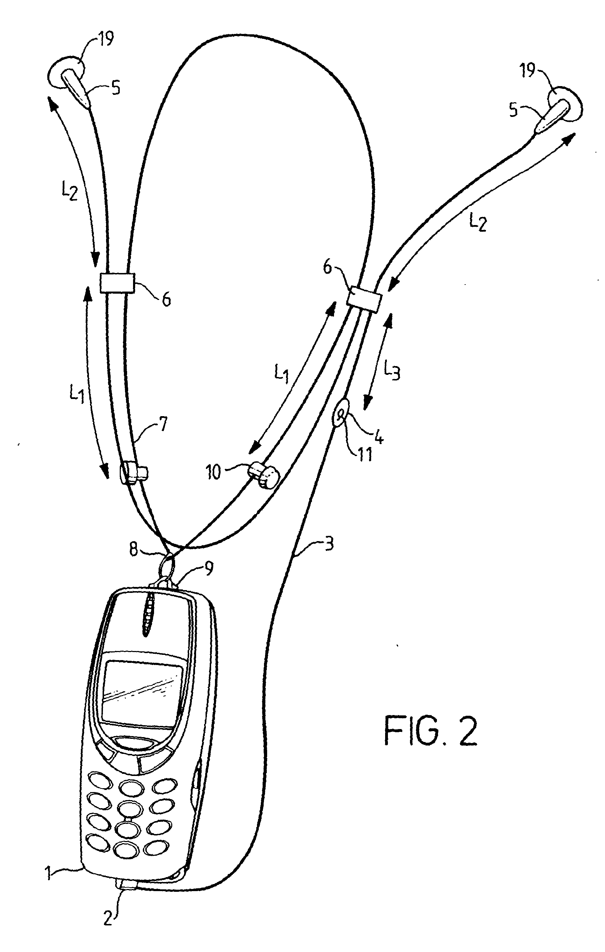

If the audio source is able to provide a stereo audio signal, when the phone 1 includes e.g. an integrated MP3 player or an FM radio, the audio accessory will include two earplug 5, two attachment device 6, and two gripping means 10 for gripping the earplugs when removed from the ear. This is shown in fig. 2. The parts having the same reference number as in fig. 1 also serves the same function.

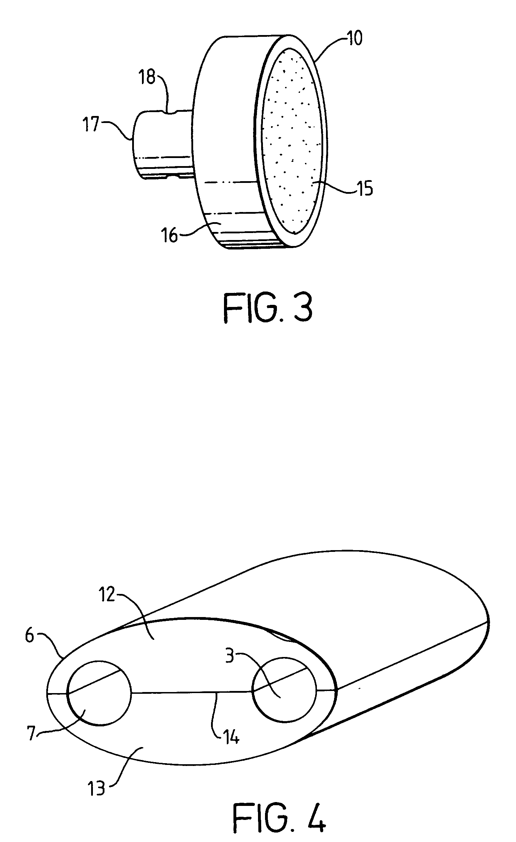

Fig. 3 shows the gripping means 10 including a disc shaped permanent magnet 15 embedded into a cover 16 from which an integrated part 17 protrudes. The protruding part 17 has a through-going bore 18 through which the neck strap passes. The gripping means 10 is provided as an appropriate resin, e.g. polyethylene, and is fixed from sliding along the neck strap by providing an appropriate glue in the bore 18.

Fig. 4 shows in perspective the attachment device 6. According to the preferred embodiment of the invention the attachment device 6 has two identical half parts 12 and 13, and when the attachment device 6 is assembled the two through going bores will be occupied by the set of wires 3 and the neck strap 7, respectively. Advantageously the two half parts 12 and 13 are provided in an appropriate resin, e.g. polyethylene, and glued or adhered together by e.g. supersonic welding.

## Claims

1. An audio accessory including
• a neck strap having an attachment device for attaching an audio source to the neck strap, whereby the audio source may be carried in said neck strap during normal use;
• at least one earplug to be connected to said audio source through a set of wires to be connected to said audio source; and
• gripping means for temporary attaching a free end of said earplug wires to said neck strap.

2. An audio accessory according to claim 1, wherein said accessory includes catching means connected to said neck strap for catching the free end of the earpiece wire carrying said least one earplug when removed from the ear.

3. An audio accessory according to claim 2, wherein said catching means includes at least one permanent magnet mounted on said neck strap.

4. An audio accessory according to claim 3, wherein said at least one magnet mounted on said neck strap is mounted at a distance from the gripping means corresponding to a free end of the earpiece wire from the gripping means.

5. An audio accessory according to claim 1, wherein the neck strap comprises gripping means for each of two earplug wires to said neck strap, and catching means connected to said neck strap for catching each free end of the earpiece wire carrying respective earplugs

6. An audio accessory substantially as hereinbefore described with reference to the accompanying drawings.
